(19) Europäisches Patentamt
European Patent Office
Office européen des brevets

(11) **EP 2 025 950 A2**

(12) **EUROPÄISCHE PATENTANMELDUNG**

(43) Veröffentlichungstag:
**18.02.2009 Patentblatt 2009/08**

(51) Int Cl.:
***F15B 15/14*** *(2006.01)*

(21) Anmeldenummer: 08013488.5

(22) Anmeldetag: **26.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **11.08.2007 DE 202007011265 U**

(71) Anmelder: **BÜMACH ENGINEERING INTERNATIONAL B.V.**
**1406 KG Bussum (NL)**

(72) Erfinder: **Bueter, Josef**
**49733 Haren/Altenberge (DE)**

(74) Vertreter: **Weihrauch, Frank et al**
**Dr. Weihrauch & Haussingen**
**Patent- und Rechtsanwälte**
**Neundorfer Strasse 2**
**98527 Suhl (DE)**

(54) **Knickstabilisierung rohrförmiger Kolbenstangen von Arbeitszylindern**

(57)  Es wird eine Knickstabiliserung einer rohrförmige Kolbenstange für einen Arbeitszylinder beschrieben, die mit geringem Aufwand und kostengünstig herstellbar ist, wobei die Kolbenstange innerhalb der elastischen Bereichs nach der Eulerschen Knicktheorie knickstabil ist.

Erfindungsgemäß ist in der Kolbenstange (5), an der mit dem Kolben (4) verbundenen Seite, ein mit dieser kraft- und formschlüssig verbundenes Stabilisierungselement (9) angeordnet, dessen Länge in Abhängigkeit von einer Länge L, als Knicklänge zwischen einem linken Gelenkpunkt (10) eines linken Gelenkkopfs (11) an der Kolbenstange (5) und einem Punkt S, als virtueller Wendepunkt einer näherungsweise sinusförmigen Biegelinie (6) auf einer Hauptachse (7) des Arbeitszylinders, ein Viertel bis die Hälfte der Länge L, vorzugsweise ein Drittel beträgt.

Fig.1

EP 2 025 950 A2

**Beschreibung**

Die Erfindung betrifft eine Knickstabilisierung für rohrförmige Kolbenstangen von Arbeitszylindern mit insbesondere großem Hub, die Kolbenstangen erfordern, deren Schlankheitsgrad λ im Bereich der elastischen Knickung liegt, wobei λ größer oder gleich 80 ist.

Aus dem Stand der Technik sind unterschiedliche Lösungen zur Knickstabilisierung von Kolbenstangen bekannt.

In der Druckschrift DE 103 37 479 A1 wird eine Kolbenstange einer Zylindereinheit beschrieben, die als Verbundbauteil aus mehreren Kunststoffmaterialien ausgebildet ist. Die Kolbenstange weist ein äußeres Rohr aus Kunststoff auf, in dem eine Füllung aus einem Kunststoffmaterial vorgesehen ist, um dem Rohr mechanische Festigkeit und Steifigkeit zu verleihen, wobei die Füllung das Rohr wenigstens teilweise ausfüllt und sich entlang der Innenseite des Rohrs erstreckt. Um eine ausreichende Stabilität zu erzielen und das Außenrohr zu stützen, sind im Kunststoff zu Bündeln gruppierte Verstärkungsfasern vorgesehen.

Aus der Druckschrift DE 196 47 506 C2 ist eine Kolbenstange für einen Stellkolben eines Stelltriebs bekannt, dessen Kolbenstange als Verbundaggregat ausgebildet ist, das eine metallische Innenstange mit einem darauf aufgesetzten zylindrischen faserverstärkten Kunststoffmantel aufweist. Die metallische Innenstange ist an den Enden so ausgebildet, dass die erforderlichen Funktionsträger der Kolbenstange, das Gelenkauge und der Arbeitskolben, lösbar mit dieser verbunden werden können.

Ein hydraulischer Arbeitszylinder, insbesondere für eine Hubarbeitsbühne wird in der Druckschrift DE 94 15 542 U1 benannt, dessen Kolbenstange im Bereich ihres Ausschubteils mit einer Stützvorrichtung verbunden ist, die über den axialen Arbeitsweg der Kolbenstange einen Knickstabilisator bildet.
Die Stützvorrichtung in Form einer Stabilisatorstange ist an einem die Kolbenstange umfassenden Verbindungsglied um die Kolbenstange angeordnet. Die Anzahl der Stabilisatorstangen ist vom Grad der Belastung der Kolbenstange abhängig.

In der Druckschrift DE 28 14 513 A1 wird ein mit einem Strömungsmedium beaufschlagter Zylinder, insbesondere für Personen und Lastenaufzüge offenbart, dessen rohrförmige Kolbenstange innen mit dem Betriebsdruck des Druckmediums des Arbeitszylinders beaufschlagt wird. Das Druckmedium wirkt zugbelastend auf die Kolbenstange, so dass bei äußerer axialer Belastung eine Entlastung der Knickspannung erzielt wird.

Eine vorgespannte hohle Kolbenstange eines Hydraulikzylinders zur Übertragung von Druckkräften und Zugkräften wird in der Druckschrift DE 29 45 199 A1 beschrieben. Die Vorspannung erfolgt mittels eines unter Druck gesetzten, in den Hohlraum der Kolbenstange eingebrachten Mediums.
Bei axialer Belastung der Kolbenstange erfolgt zunächst eine Kompensation mit den Vorspannkräften, so dass bei Zunahme der Belastung, die eine Knickung verursachenden äußeren Kräfte auf das Rohr entsprechend gemindert werden.

Allen aus den Druckschriften bekannten Lösungen ist gemeinsam, dass diese aufwendig und kostenintensiv herzustellen sind sowie die Knickstabilisierung auch einfacher, außer Kolbenstangen aus Plastik für spezielle Anwendungen mit im Vergleich zu Kolbenstangen aus Metall geringeren Forderungen an deren Belastbarkeit, durch die Wahl von Rohren mit größerer Wanddicke für die Kolbenstange den Anforderungen angepasst werden könnten.

Aufgabe der Erfindung ist es, eine Knickstabilisierung einer rohrförmigen Kolbenstange für einen Arbeitszylinder zu entwickeln, die mit geringem Aufwand und kostengünstig herstellbar ist, wobei die Kolbenstange innerhalb der elastischen Bereichs nach der Eulerschen Knicktheorie knickstabil ist.

Die Aufgabe wird durch die im Patentanspruch 1 aufgeführten Merkmale gelöst. Bevorzugte Weiterbildungen ergeben sich aus den Unteransprüchen.

Der besonders knickgefährdete Bereich des Querschnitts einer Kolbenstange liegt außerhalb deren Führung des Arbeitszylinders. Dieser Bereich ist gegen Knickung zu stabilisieren.

Ein Stab gleicher Länge und auch gleicher Querschnittsfläche weist bei stabilitätstheoretischer Betrachtung immer dann die geringste Knicksicherheit auf, wenn das Trägheitsmoment am geringsten ist.

Das geringste Trägheitsmoment kann nach der Formel:

$$I_{\min} = \frac{\pi}{64}\left(D^4 - d^4\right)$$

berechnet werden.

$I_{min}$ = kleinstes Trägheitsmoment [mm⁴]
D = Außendurchmesser des Rohrs [mm]
d = Innendurchmesser des Rohrs [mm]

Der Arbeitszylinder erfüllt die Bedingung nach der Formel für die Kolbenstange im ausgefahrenen Zustand für jeden Querschnitt einer Kolbenstange innerhalb des gesamten Systems des Arbeitszylinders, weil die nachgeordneten Teile über die Führung bis zum Zylinderboden in allen Fällen größere Trägheitsmomente ergeben.

Geht man bei der Stabilitätsbetrachtung davon aus, dass die Kolbenstange im Bereich der Führung in einem linken Endesteil des Arbeitszylinders über den Kolben und die nachgeschaltete hochgespannte Säule des Druckmediums an einem virtuellen Festpunkt fixiert ist, dann liegt bei ausgefahrener Kolbenstange für die Seite des Zylinderrohrs der Belastungsfall nach dem Grundfall, Fall 2 der Eulerschen Knicktheorie vor, wonach sich die Knicklast $F_K$ nach der Formel:

$$F_k = \frac{\pi^2 \cdot E \cdot I_{min}}{L^2}$$

errechnet.

E = Elastizitätsmodul [N/mm²]
L = Länge des Stabes / freie Knicklänge [mm]

In einem virtuellen Festpunkt, der Führungslagerung der Kolbenstange im linken Endesteil des Arbeitszylinders hat die sich in der Kolbenstange und dem Zylinderrohr ergebende Biegelinie einen Nulldurchgang, da die nachgeschalteten Bauteile als eine imaginäre Mittelstützung wirken, wobei sich dadurch die maximale Durchbiegung der Kolbenstange im ausgefahrenen Zustand in der Mitte zwischen dem virtuellen Festpunkt bis zu einem Gelenkpunkt ergibt.

Die maximale Durchbiegung $\omega_{max}$ der Kolbenstange unter einer einwirkenden Kraft F wird nach der Formel

$$\omega_{max} = \frac{F \cdot L^3}{3 \cdot E \cdot I_{min}}$$

ermittelt.

Eine Stabilisierung einer rohrförmigen Kolbenstange erfolgt im ersten Drittel deren axialer Ausdehnung, an der mit dem Arbeitskolben verbundenen Seite. Hierzu ist ein in diesem Bereich angeordnetes Stabilisierungselement, in Form eines stabilen Rohrs oder alternativ eines Vollstabs, vom Kolbenstangenrohr kraft- und formschlüssig aufgenommen.

Die Führung der Kolbenstange wird dadurch scheinbar verlängert, wodurch eine Reduzierung des Maßes der freien Knicklänge bewirkt wird.
Diese Änderung hat Einfluss auf den Schlankheitsgrad $\lambda$, der sich demzufolge zu Gunsten der Berechnung der Durchbiegung für Stäbe mit kleinerem $\lambda$ verändert, da

sich $\lambda$ nach $\lambda = \dfrac{L}{i_{min}}$ errechnen lässt, wobei sich $i_{min}$

aus $i_{min} = \sqrt{\dfrac{I_{min}}{A}}$ ergibt.

$i_{min}$ = minimaler Trägheitsradius [mm]
A = Querschnitt der Ringfläche des Kolbenstangenrohrs

[mm²]

Der Schlankheitsgrad spiegelt die geometrischen Eigenschaften eines auf Knickung zu belastenden Stabes wider und bestimmt somit dessen Knickverhalten.

In einer möglichen grafischen Darstellung der Knickspannung $\sigma$ über dem Schlankheitsgrad $\lambda$, wird der Kurvenverlauf der Knickspannung $\sigma$ in Abhängigkeit des Materials des Stabes bei bestimmten Werten von $\lambda$ in einen Bereich elastischer und einen elastisch-plastischer Knickung unterteilt. Für Stahlwerkstoffe liegt dieser Wert bei 80, so dass bei reduzierter Knicklänge, nach der Stabilisierung mittels des im ersten Drittel der rohrförmigen Kolbenstange angeordneten Stabilisierungselements in Form des Rohrs oder alternativ des Vollstabs, der Stab in Form der Kolbenstange gegen das Knicken stabilisiert ist.

Die Reduzierung der freien Knicklänge mittels des vom Kolbenstangenrohr im ersten Drittel, im ersten Drittel der Gesamtknicklänge bei ausgefahrener Kolbenstange, aufgenommenen Stabilisierungselements lässt sich durch die mit den Formeln wiedergegebenen Beziehungen nachvollziehen, wobei für die Knickspannung $\sigma_{oST}$ [N/mm²] ohne Stabilisierungselement gilt :

$$\sigma_{oSt} = \frac{\pi^2 \cdot E \cdot I}{L^2 \cdot A}$$ und mit Stabilisierungselement

$$\sigma_{mSt} = \frac{\pi^2 \cdot E \cdot I}{(L - 0{,}33L)^2 \cdot A} \quad .$$

Aus den damit vorliegenden unterschiedlichen Knickspannungen lassen sich die günstigen Eigenschaften der stabilisierten rohrförmigen Kolbenstange erkennen.

Neben der geringeren Durchbiegung erhöht sich die Sicherheit S innerhalb des Bereichs der elastischen Knickung nach Euler um den Faktor 2,23 gegenüber einem, im ersten Drittel der rohrförmigen Kolbenstange kein Stabilisierungselements in Form des Rohrs oder alternativ des Vollstabs aufweisendes, Kolbenstangenrohr, wie sich aus $S = \dfrac{1}{(1 - 0{,}33)^2} = 2{,}23$ ergibt.

Ein solcher Zugewinn an Sicherheit ist für gedrungene Stäbe, für kurze Kolbenstangen, ohne wesentliche Bedeutung, da bei diesen der technische Nachweis der Sicherheit gegen das Fließen des Materials zu führen, allerdings für schlanke Stäbe im elastischen Bereich entscheidend ist.

Das Knickverhalten der rohrförmigen Kolbenstange im elastisch-plastischen Bereich wird von dem beschriebenen Stabilisierungselement nur geringfügig beeinflusst, da die Spannungen innerhalb dieses Bereichs bis zur Fließgrenze des Materials, hier des Stahls, nahezu gleich bleiben.

Die Vorteile der Erfindung bestehen weiter insbesondere in dem wesentlich geringerer Materialeinsatz gegenüber einer über deren gesamten Länge mittels eines Stabilisierungselements ausgestatteten rohrförmigen Kolbenstange oder Verwendung eines Rohrs mit größerer Wanddicke als Kolbenstange als auch Kolbenstangen aus Vollmaterial.

Die Erfindung wird als Ausführungsbeispiel an Hand von

Fig. 1  als Schnittdarstellung eines Arbeitszylinders mit ausgefahrener Kolbenstange ohne Stabilisierungselement und

Fig. 2  als Schnittdarstellung eines Arbeitszylinders mit ausgefahrener Kolbenstange mit Stabilisierungselement

näher erläutert.

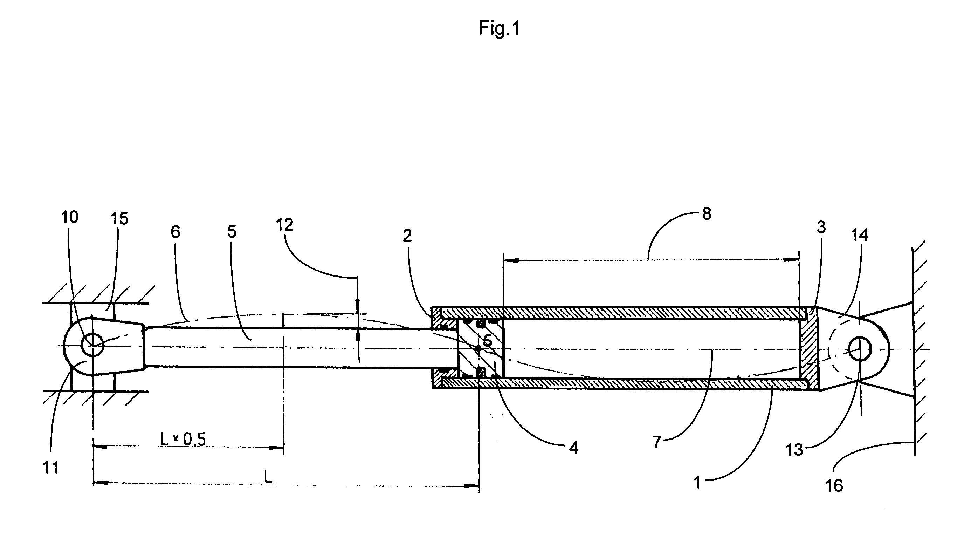

Ein üblicher Arbeitszylinder nach Fig.1 besteht im Wesentlichen aus einem Zylinderrohr 1, mit einem dieses dichtungssicher verschließenden linken Endesteil 2 und rechten Endesteil 3, einem Kolben 4 und einer rohrförmigen Kolbenstange 5.

Im dargestellten ausgefahrenen Zustand der Kolbenstange 5 liegt bei Belastung zwischen dem als Führung der Kolbenstange 5 ausgebildeten Endesteil 2 und dem Kolben 4 ein Punkt S als virtueller Wendepunkt einer näherungsweise sinusförmigen Biegelinie 6 auf einer Hauptachse 7 des Arbeitszylinders, da vorausgesetzt wird, dass die Kolbenstange 5 im Bereich der Führung im linken Endesteil 2 des Arbeitszylinders über den Kolben 4 und die nachgeschaltete hochgespannte Säule des Druckmediums im Zylinderrohr 1 an einem virtuellen Festpunkt, hier am Punkt S, eine Fixierung erfährt.

Der Punkt S liegt im Flächenschwerpunkt der nicht näher bezeichneten Lagerungsteile der Kolbenstange 5 und des Kolbens 4. Er verändert seine Position beim Ausfahren der Kolbenstange 5 in dem Maße, in dem diese ausgefahren wird, und erreicht im ausgefahrenen Zustand der Kolbenstange 5 seinen höchsten Punkt im Arbeitszylinder bezüglich eines Gesamthubs 8.

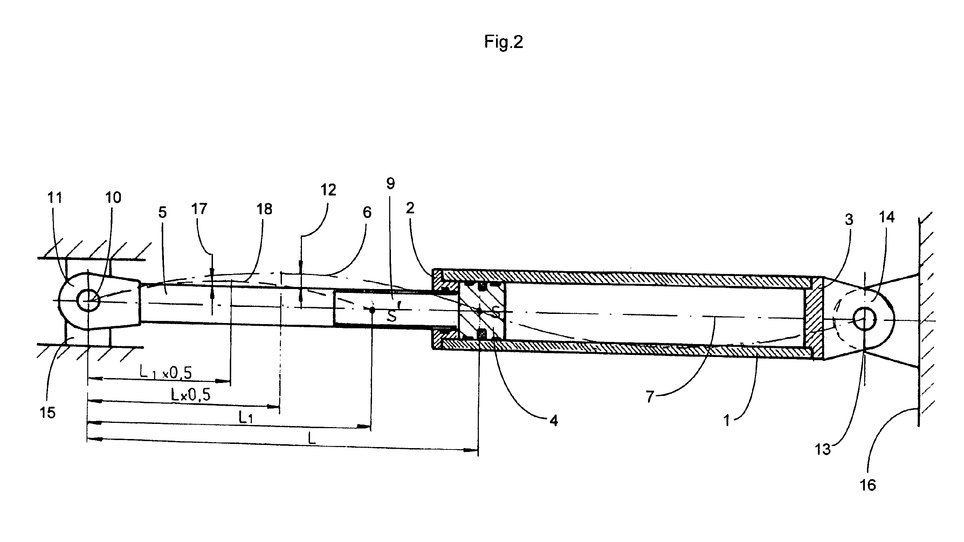

In Fig. 2 ist ein in der rohrförmigen Kolbenstange 5 angeordnetes, mit dieser kraft- und formschlüssig verbundenes Stabilisierungselement 9 in Form eines Rohrs an der mit dem Kolben 4 verbundenen Seite dargestellt, dessen axiale Länge ein Drittel einer Gesamtlänge L, als Knicklänge, zwischen einem linken Gelenkpunkt 10 eines linken Gelenkkopfs 11 und dem Punkt S, beträgt.

Die Länge des Stabilisierungselement 9 kann in Abhängigkeit von der Länge L in einem Bereich von einem Viertel bis zu deren Hälfte variiert werden, wobei die günstigste Ausgestaltung bei einem Drittel vorliegt.

Die in den Fig. 1 und 2 dargestellte sinusförmigen Biegelinie 6 weist bei der Kolbenstange 5 ohne das Stabilisierungselement 9 zwischen dem linken Gelenkpunkt 10 und dem Punkt S genau mittig, bei L x 0,5, der halben Knicklänge L, eine maximale Durchbiegung 12 $\omega_{max}$ auf.

Unter der vereinfachenden Annahme eines durchgängig gleichen Trägheitsmoments I der an der Knickung beteiligten Bauteile des Arbeitszylinders zwischen dem linken Gelenkpunkt 10 und einem rechten Gelenkpunkt 13 an einem rechten Gelenkkopf 14, setzt sich die sinusförmige Biegelinie 6 im Bereich des Zylinderrohrs 1 fort.

Der linke Gelenkpunkt 10 ist über den linken Gelenkkopf 11 mit der Kolbenstange 5 und das rechte Endesteil 3 über den rechten Gelenkkopf 14 mit dem rechten Gelenkpunkt 13 verbunden.

Der linke Gelenkpunkt 10 ist über ein Anlenkelement 15 lagegesichert und der rechte Gelenkpunkt 13 fest mit einem Gestell 16 verbunden.

Mit dem in der rohrförmigen Kolbenstange 5 angeordneten und mit dieser kraft- und formschlüssig verbundenen Stabilisierungselement 9 ergibt sich eine Änderung der Lage des Punktes S, als dem Wendepunkt der sinusförmigen Biegelinie 6, der in Fig.2 als $S^I$ dargestellt ist, so dass sich die freie Knicklänge auf $L_1$ verringert, wobei die zugehörige halbe Knicklänge in Fig.2 mit $L_1$ x 0,5 bezeichnet ist.

Eine Amplitude 17 als maximale Durchbiegung $\omega_{1max}$ der sich mit der Änderung der Lage des Punktes S ergebenden, resultierenden Biegelinie 18 ist, wie in Fig.2 gezeigt, wesentlich geringer als die maximale Durchbiegung 12 $\omega_{max}$, woraus die erhöhte Knicksicherheit offensichtlich ist.

Das Stabilisierungselement 9 kann, neben der Ausführung in Form eines Rohrs, alternativ auch aus Vollmaterial bestehen oder ein Formteil, wie ein strukturiertes Schmiedeteil oder gefalteter Stützkörper, sein.

Verwendete Bezugszeichen

1  Zylinderrohr
2  linkes Endesteil
3  rechtes Endesteil
4  Kolben
5  Kolbenstange
6  Biegelinie
7  Hauptachse
8  Gesamthub
9  Stabilisierungselement
10  linker Gelenkpunkt
11  linker Gelenkkopf
12  maximale Durchbiegung
13  rechter Gelenkpunkt
14  rechter Gelenkkopf
15  Anlenkelement
16  Gestell
17  Amplitude
18  resultierende Biegelinie

**Patentansprüche**

1. Knickstabilisierung für rohrförmige Kolbenstangen von Arbeitszylindern mit großem Hub, bestehend im Wesentlichen aus einem Zylinderrohr (1), mit einem dieses dichtungssicher verschließenden linken Endesteil (2) und rechten Endesteil (3), einem Kolben (4) und einer rohrförmigen Kolbenstange (5), **dadurch gekennzeichnet, dass** in der Kolbenstange (5) an der mit dem Kolben (4) verbundenen Seite ein mit dieser kraft- und formschlüssig verbundenes Stabilisierungselement (9) angeordnet ist und dass die Länge des Stabilisierungselements (9) in Abhängigkeit von einer Länge L, als Knicklänge zwischen einem linken Gelenkpunkt (10) eines linken Gelenkkopfs (11) an der Kolbenstange (5) und einem Punkt S, als virtueller Wendepunkt einer näherungsweise sinusförmigen Biegelinie (6) auf einer Hauptachse (7) des Arbeitszylinders, ein Viertel bis die Hälfte der Länge L, vorzugsweise ein Drittel, beträgt.

2. Knickstabilisierung nach Anspruch 1, **dadurch gekennzeichnet, dass** das Stabilisierungselement (9) aus einem Rohr besteht.

3. Knickstabilisierung nach Anspruch 1, **dadurch gekennzeichnet, dass** das Stabilisierungselement (9) aus Vollmaterial besteht.

4. Knickstabilisierung nach Anspruch 1, **dadurch gekennzeichnet, dass** das Stabilisierungselement (9) ein Formteil ist.

EP 2 025 950 A2

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10337479 A1
- DE 19647506 C2
- DE 9415542 U1
- DE 2814513 A1
- DE 2945199 A1